# EUROPEAN PATENT SPECIFICATION

(11) **EP 4 333 184 B1**
(45) Date of publication and mention of the grant of the patent: **28.05.2025**
(21) Application number: 21962900.3
(22) Date of filing: 04.11.2021
(51) Int. Cl.: H01M 50/367, H01M 10/613, H01M 10/655, H01M 10/6556, H01M 50/244, H01M 50/249, H01M 50/271, H01M 50/317, H01M 10/625, H01M 50/24, F16K 24/04

(54) **BOX ASSEMBLY OF BATTERY, DEVICE, AND METHOD FOR MANUFACTURING BOX ASSEMBLY OF BATTERY**
KASTENANORDNUNG EINER BATTERIE, VORRICHTUNG UND VERFAHREN ZUR HERSTELLUNG EINER KASTENANORDNUNG EINER BATTERIE
ENSEMBLE BOÎTIER DE BATTERIE, DISPOSITIF ET PROCÉDÉ DE FABRICATION D'ENSEMBLE BOÎTIER DE BATTERIE

(43) Date of publication of application: 06.03.2024
(73) Proprietor: Contemporary Amperex Technology (Hong Kong) Limited, Central, Central And Western District (HK)
(72) Inventor: CHEN, Binbin, Ningde, Fujian 352100 (CN); MIAO, Huimin, Ningde, Fujian 352100 (CN); CHEN, Zhiming, Ningde, Fujian 352100 (CN); KE, Qingpeng, Ningde, Fujian 352100 (CN)
(74) Representative: Frick, Robert
(86) International application number: PCT/CN2021/128805
(87) International publication number: WO 2023/077383

(56) References cited:
- CN-A- 106 678 402
- CN-A- 106 678 402
- CN-A- 107 061 816
- CN-A- 109 411 661
- CN-A- 109 411 661
- CN-A- 113 314 794
- CN-B- 113 314 794
- CN-U- 208 422 996
- CN-U- 214 505 684
- CN-U- 214 505 684
- JP-A- 2013 191 306

## Description

### TECHNICAL FIELD

This application relates to the field of battery technologies, and specifically, to a battery box assembly, a battery, and a manufacturing method of battery box assembly.

### BACKGROUND

As a type of high-performance secondary battery, lithium-ion batteries are widely used in the field of traction batteries owing to their advantages such as high operating voltage, high energy density, small size, large capacity, long cycle life, and no memory effect.

A battery produces heat during use, leading to a temperature rise in the battery. Undesirably high battery temperature causes spontaneous combustion or explosion of the battery, so it is necessary to cool the battery. The inventor of this application has found in research that the existing heat dissipation scheme provides poor heat dissipation effects, and causes problems such as abnormal sound during operation.

In the prior art, battery box assemblies have been disclosed in CN 113 314 794 A, CN 214 505 684 U, CN 109 411 661 A and CN 106 678 402 A.

### SUMMARY

In view of the problems in the background, this application provides a battery box assembly, a battery, and a manufacturing method of battery box assembly to prevent abnormal sound caused by installation of a thermal management component of a heat dissipation plate.

This application provides a battery box assembly according to claim 1, including: a thermal management component configured to regulate temperature of a battery module; a frame fixed to an edge region of the thermal management component; a top cover covering the frame and forming, together with the frame and the thermal management component, a box for accommodating a battery module; a bottom protective plate fixed to the thermal management component in a direction away from the battery module and spaced from the thermal management component to form a sealed space; and an airflow pipeline arranged inside the box, where the airflow pipeline communicates with the sealed space on one end and communicates with the outside of the box on the other end.

This application also provides a device including the battery box assembly described above and a battery arranged thereon.

This application also provides a manufacturing method of battery box assembly, the method including: providing a thermal management component configured to regulate temperature of a battery module; providing a frame fixed to an edge region of the thermal management component; providing a top cover covering the frame and forming, together with the frame and the thermal management component, a box for accommodating a battery module; providing a bottom protective plate fixed to the thermal management component in a direction away from the battery module and spaced from the thermal management component to form a sealed space; and providing an airflow pipeline, where the airflow is arranged inside the box, and the airflow pipeline communicates with the sealed space on one end and communicates with the outside of the box on the other end.

In comparison with the prior art, in the battery box assembly, battery, and manufacturing method of battery box assembly provided according to this application, the airflow pipeline is used to allow the sealed space between the bottom protective plate and the thermal management component to communicate with the outside of the box, eliminating pressure difference between air pressure in the sealed space and air pressure outside the box caused by temperature changes of the thermal management component, thereby avoiding that the bottom protective plate deforms and thus produces abnormal sound.

Optionally, in the battery box assembly, the thermal management component is provided with a connector running through the thermal management component and communicating with the sealed space, where the airflow pipeline communicates with the sealed space on one end via the connector. With a connector communicating with the sealed space used to achieve communication between the airflow pipeline and the sealed space, and parameters of the connector such as shape, size, and/or specifications can be designed to facilitate standardized production and assembly of different products, thus reducing production costs and improving assembly efficiency.

Optionally, in the battery box assembly, the connector is a male connector, where the male connector includes a tubular portion with one end running through the thermal management component and communicating with the sealed space and the other end embedded inside the airflow pipeline, and/or the male connector includes a limiting flange protruding from an outer wall of the tubular portion, where the limiting flange abuts against and is fixed to a side surface of the thermal management component facing away from the bottom protective plate. The provision of the connector as a male connector with protruding structures at the joining positions on the two ends facilitates the ease of one end of the connector running through the thermal management component to allow communication with the sealed space after the thermal management component and the bottom protective plate are fixed, and also facilitates the ease of the airflow pipeline sleeving the other end of the connector to reduce assembly difficulty and guarantee the assembly yield. In addition, the limiting flange protruding from the outer wall of the tubular portion of the connector provides a limiting effect for the connector via the limiting flange abutting against the thermal management component, so as to guarantee that the connector controllably extends into the sealed space after running through the thermal management component, and guarantee consistency of an assembled product. Meanwhile, the connector can be fixed via the limiting flange abutting against the thermal management component, so as to guarantee reliability of the assembled product.

According to the invention, in the battery box assembly, the frame is provided with a balancing valve assembly allowing communication between the inside of the box and the outside of the box, where the airflow pipeline communicates with the outside of the box on the other end via the balancing valve assembly. In a scenario where the battery box assembly is applied to the bottom of a vehicle, the provision of the balancing valve for communicating with the outside of the frame which serves as the side wall of the box keeps the opening of the balancing valve away from the bottom protective plate closer to the ground, thereby avoiding erosion and damage to the balancing valve caused by the mud and sand splashed from the ground during traveling of the vehicle.

Furhter according to the invention, in the battery box assembly, the balancing valve assembly includes a balancing valve body and a connector portion communicating with the balancing valve body, where the connector portion is embedded inside the frame, the balancing valve body extends out of the box, and the airflow pipeline communicates with the balancing valve body via the connector portion. With the connector portion which allows communication between the balancing valve body and airflow pipeline embedded in the frame, the communication position between the balancing valve body and airflow pipeline can be better fixed via the fixing effect of the frame, improving the reliability under a bumpy environment during the traveling of a vehicle.

Optionally, in the battery box assembly, the connector portion is a male connector, and an end of the airflow pipeline connected to the connector portion is a female connector, where the female connector extends into the frame and is in snap-fit with an inner side wall of the frame.

According to the invention, the balancing valve body includes: a body portion, where the body portion includes a bottom wall attached to an outer surface of the frame, an annular side wall bendingly extending from the bottom wall toward a direction leaving the frame and enclosing a chamber, a first opening made into the bottom wall and allowing the chamber to communicate with the connector portion, and a second opening enclosed by the annular side wall and opposite the first opening; a first sealing ring sandwiched between the outer surface of the frame and the bottom wall; a waterproof breathable film disposed inside the chamber and separating the first opening and the second opening on two opposite sides; a protective cover covering the second opening; and an air vent made into the annular side wall, where the air vent and the second opening are located on the same side of the waterproof breathable film. With the bottom wall of the balancing valve body abutting against the frame and the first sealing ring sandwiched between them, external moisture can be prevented from entering the airflow pipeline through their joint. The protective cover covering the second opening prevents external moisture and foreign matters from entering the airflow pipeline through the second opening and the first opening. With the waterproof breathable film provided between the first opening and the second opening and the air vent and the second opening located on the same side of the waterproof breathable film, external moisture can be prevented from entering the airflow pipeline through the air vent and the first opening. With the air vent made into the annular side wall in a direction different from an extension direction of an airflow passage between the first opening and the connector portion, twisting degree and length of a path for the external moisture or other foreign matters to reach the waterproof breathable film through the air vent can be increased, further improving the ability to separate moisture and foreign matters, prolonging service life of the waterproof breathable film, improving the reliability of the product.

Optionally, in the battery box assembly, a fixing portion having a threaded hole protrudes from the body portion, and the balancing valve assembly further includes a bolt, where the fixing portion is fixed to the frame via the threaded hole by the bolt. The balancing valve assembly being fixed to the frame via the protruding fixing portion and the bolt guarantees that the balancing valve assembly is firmly fixed, improving reliability of the product.

Optionally, in the battery box assembly, an air hole communicating with the airflow pipeline and the chamber runs through the connector portion, and a snap-fit slot is provided on an outer surface of the connector portion, where the airflow pipeline sleeves the periphery of the connector portion and is snap fitted into the snap-fit slot. The airflow pipeline being snap fitted into the snap-fit slot guarantees that the airflow pipeline and the connector portion are firmly fixed, preventing detachment of the airflow pipeline, and thus improving the reliability of the product.

Optionally, in the battery box assembly, a second sealing ring is sandwiched between the connector portion and the airflow pipeline sleeving the periphery of the connector portion. Such arrangement can prevent moisture from entering the airflow pipeline through the joint between the connector portion and the airflow pipeline.

Optionally, in the battery box assembly, the bottom wall is provided with a runway-shaped groove for accommodating the first sealing ring, where the first sealing ring is runway-shaped. The first sealing ring being designed into a runway type prevents warping during assembly, allowing easy assembly and improving production efficiency.

Optionally, in the battery box assembly, the airflow pipeline further includes an elbow connector, a straight connector, and a corrugated pipe, where the corrugated pipe is located between the elbow connector and the straight connector and allows the elbow connector to communicate with the straight connector, where the elbow connector communicates with the sealed space, and the straight connector communicates with the outside of the box. The provision of a connector at both ends of the corrugated pipe enables the airflow pipeline to achieve rigid connection with other components at two end positions of the airflow pipeline, avoiding the problem of detachment caused by flexible connection, and the use of the elbow connector enables changing of the extension direction of the airflow pipeline so as to adapt to the direction change of the airflow path inside the box without impacting the proper arrangement of the battery module and other components inside the box.

Optionally, in the manufacturing method of battery box assembly, the frame is provided with a balancing valve assembly communicating with the outside of the box; and the other end of the airflow pipeline is connected communicatively to the balancing valve assembly.

### BRIEF DESCRIPTION OF DRAWINGS

FIG. 1 is an exploded view of a battery box assembly according to a first embodiment of this application;
FIG. 2 is a three-dimensional view of the battery box assembly according to the first embodiment of this application without a top cover;
FIG. 3 is a three-dimensional view of the battery box assembly according to the first embodiment of this application which is complete;
FIG. 4 is a schematic vertical view of the battery box assembly according to the first embodiment of this application without a top cover;
FIG. 5 is a schematic diagram of a local cross-section of the battery box assembly without a top cover shown in FIG. 4 along A-A;
FIG. 6 is a schematic enlarged view of part A shown in FIG. 5; and
FIG. 7 is a three-dimensional exploded view of an airflow pipeline and a balancing valve assembly according to the first embodiment of this application.

### DESCRIPTION OF EMBODIMENTS

To make the objectives, technical solutions, and advantages of embodiments of this application clearer, the following describes embodiments of this application in detail with reference to the accompanying drawings.

At present, with the continuous development of battery technology, as a type of high-performance secondary batteries, lithium-ion batteries are widely applied to the field of traction batteries owing to their advantages such as high operating voltage, high energy density, small size, large capacity, long cycle life, and zero memory effect. In scenarios of being used as a traction battery of a vehicle, a battery module is typically arranged inside a battery box, and then fitted on a bottom protective plate at the bottom of a vehicle after a water cooling plate is provided at the bottom of the battery box. Furthermore, the space between the bottom protective plate and the water cooling plate will be sealed to guarantee that the sealing protection level of the battery module meets the requirement.

The inventor has noticed that during use of the battery, the heat exchange medium in the water cooling plate causes thermal expansion and contraction of the air, resulting in change of air pressure in the sealed space between the bottom protective plate and the water cooling plate, and as a result of the pressure difference between the inside and outside of the sealed space, the bottom protective plate deforms, producing abnormal sound due.

Given the above considerations, to resolve the problem that the change of the air pressure in the sealed space between the bottom protective plate and the water cooling plate causes the bottom protective plate to deform and thus produce abnormal sound, the inventor has designed a battery box assembly through in-depth research. The assembly includes: a thermal management component configured to regulate temperature of a battery module; a frame fixed to an edge region of the thermal management component; a top cover covering the frame and forming, together with the frame and the thermal management component, a box for accommodating a battery module; a bottom protective plate fixed to the thermal management component in a direction away from the battery module and spaced from the thermal management component to form a sealed space; and an airflow pipeline arranged inside the box, where the airflow pipeline communicates with the sealed space on one end and communicates with the outside of the box on the other end.

In this type of battery box assembly, the airflow pipeline allows the sealed space between the bottom protective plate and the thermal management component to communicate with the outside of the box. So, even if the water cooling plate causes thermal expansion and contraction of the air in the sealed space during operation, no pressure difference between the air pressure in the sealed space and the air pressure outside the box will be caused, because the sealed space communicates with the outside of the box. Therefore, this can eliminate pressure difference between air pressure in the sealed space and air pressure outside the box caused by temperature changes of the thermal management component, avoiding that the bottom protective plate deforms under the action of a pressure difference and thus produces abnormal sound.

It should be noted that the battery box assembly disclosed in the embodiments of this application can be applied without limitation to traction batteries for vehicles, and can also be applied to other electric devices having traction batteries such as ships or aircraft, for example, electric bicycles, electric cars, ships, and spacecraft, so as to avoid the problem that traction-battery electric devices requiring heat dissipation have abnormal sound caused by deformation of the protective plate or similar elements due to temperature changes of the thermal management component. The spacecraft can include airplanes, rockets, space shuttles, and spaceships.

It can be understood that the battery box assembly is not limited to the application in electric devices having traction batteries. In other electric devices without traction batteries having the same heat dissipation requirements, the battery box assembly can also be used to prevent the abnormal sound caused by the deformation of the protective plate or similar elements due to temperature changes of the thermal management component. Such electric devices may be but are not limited to cell phones, tablets, laptops, electric toys, and electric tools. The electric toys may include fixed or mobile electric toys, for example, game consoles, electric toy cars, electric toy ships, and electric toy airplanes.

The inventor of this application also provides a battery and a manufacturing method of battery box assembly. Such battery and a battery box assembly manufactured by using such manufacturing method can eliminate the pressure difference between air pressure in the sealed space and air pressure outside the box caused by temperature changes of the thermal management component, avoiding that the bottom protective plate deforms under the action of a pressure difference and thus produces abnormal sound.

The following is a description of the implementation details of the battery box assembly provided in the embodiments of this application. This description provides implementation details for ease of understanding only but is not a necessity for implementing this solution.

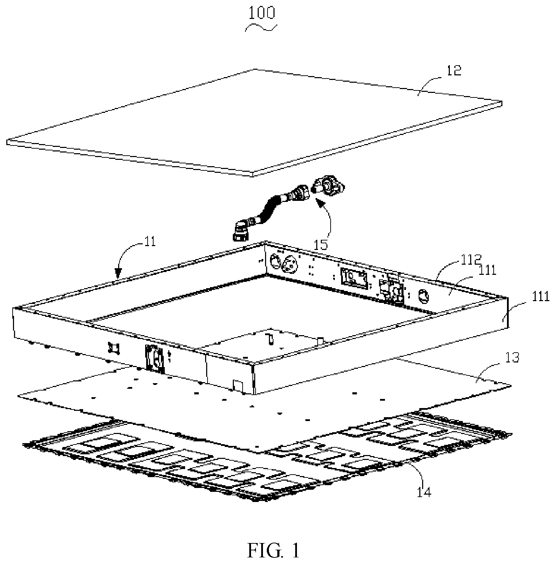

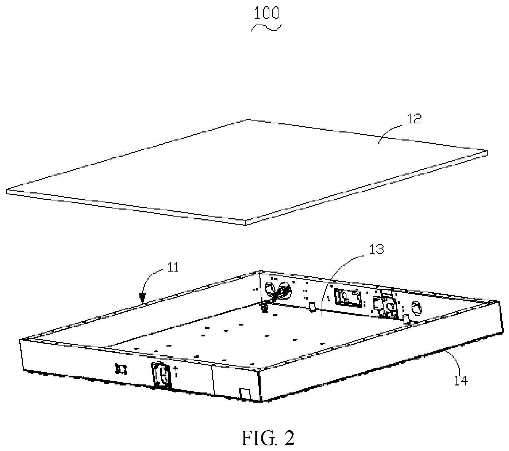

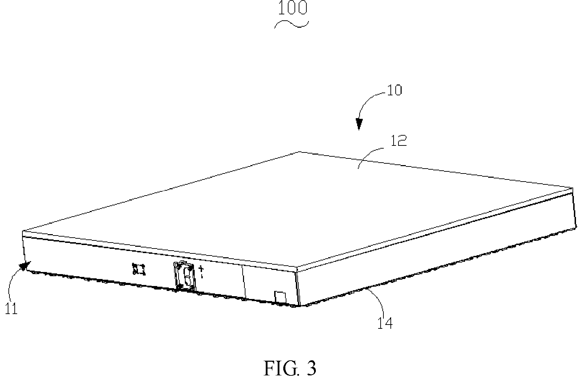

Refer to FIG. 1 to FIG. 3. A first embodiment of this application provides a battery box assembly 1 including a frame 11, a top cover 12, a thermal management component 13, a bottom protective plate 14, and an airflow pipeline 15. The thermal management component 13 is configured to regulate temperature of the battery module. The frame 11 is fixed to an edge region of the thermal management component 13. The top cover 12 covers the frame 11 and forms, together with the frame 11 and the thermal management component 13, a box for accommodating the battery module. The bottom protective plate 14 is fixed to the thermal management component 13 in a direction away from the battery module and spaced from the thermal management component 13 to form a sealed space. The airflow pipeline 15 is provided inside the box. The airflow pipeline 15 communicates with the sealed space on one end and communicates with the outside of the box on the other end. The frame 11, the top cover 12, and the thermal management component 13 jointly form a box 10, where an internal space 100 (not shown) of the box 10 is used to accommodate the battery module.

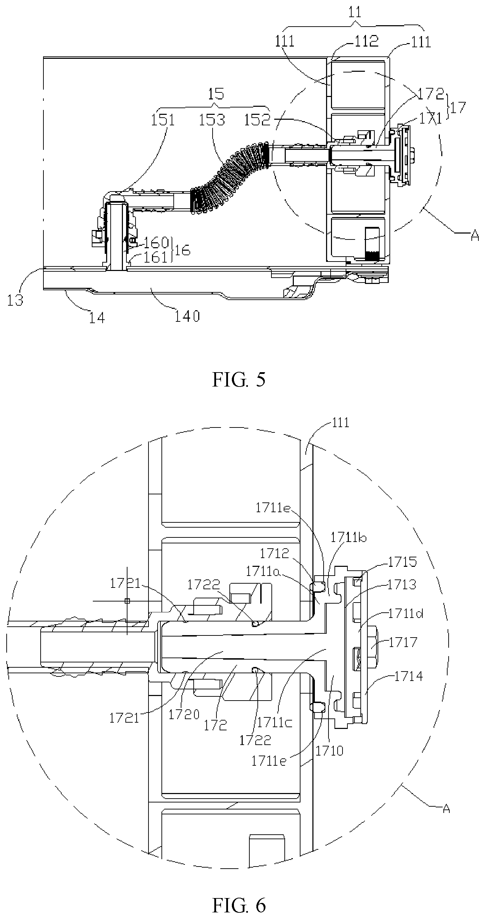

The outer contour of the frame 11 is roughly rectangular, forming an outer boundary of a placement space for the battery module so as to protect the battery module. Specifically, in this embodiment, the frame 11 is a square frame formed by joining a plurality of plates, where the square frame includes four side walls connected head to tail. Each side wall may be a structure formed by a single-layer solid thin plate, or may include two opposite and spaced side plates 111 and a top plate 112 located at the top edges of the two opposite side plates 111 and connecting the two opposite side plates 111 (also refer to FIG. 5). Certainly, in specific design and manufacturing processes, a double-layer side wall may be provided at positions where the battery bears large forces, for example, the front and rear ends of a mounting position of the battery, to reinforce structural strength; and a single-layer side wall structure may be provided at positions where the battery bears small forces, for example, the left and right sides of the mounting position of the battery.

The side wall of the double-layer frame 11 has an air interlayer, and the air inside the air interlayer can play a role in heat preservation, reducing the heat transfer between the inside and outside of the frame 11, thereby preventing the battery module located inside the frame 11 (that is, in the internal space 100 of the box 10) from being impacted by the external environment (that is, the external space of the box 10 outside of the frame 11), and guaranteeing that the battery module is less impacted by temperature of the external environment.

The top cover 12 covers the top of the frame 11 to cover/shield the placement space for the battery module. Specifically, the top cover 12 may be a single-layer plate or a double-layer plate. In the case that the top cover 12 is a double-layer plate, it may also be formed as s structure with an internal air interlayer, where the air inside the air interlayer can play the role of heat preservation, avoiding the impact of temperature of the external environment (that is, the external space of the box 10 above the top cover 12) on the part below the top cover 12 (that is, in the internal space 100 of the box 10).

The thermal management component 13 is configured for accommodating a fluid to regulate the temperature of a plurality of battery modules. The fluid here may be liquid or gas, and regulating temperature means heating or cooling the plurality of battery modules. In the case of cooling or reducing the temperature of battery modules, the thermal management component is configured to accommodate a cooling fluid to reduce the temperature of the plurality of battery modules. In this case, the thermal management component may also be referred to as a cooling component, a cooling system, a cooling plate, or the like, and the fluid accommodated therein may also be referred to as a cooling medium or a cooling fluid, and more specifically, as a cooling liquid or a cooling gas. In addition, the thermal management component may also be configured to heat the plurality of battery modules. This is not limited in embodiments of this application. Optionally, the fluid may flow circularly to achieve a better temperature regulation effect. Optionally, the fluid may be water, a mixed liquid of water and ethylene glycol, air, or the like. In this embodiment, the thermal management component 13 is a water cooling plate, where the water cooling plate is located below the internal space 100 and provided with a low-temperature liquid inside to take away heat produced during charge and discharge of the battery module. More specifically, in this embodiment, the frame 11 is fixed to the edge region of the thermal management component 13, and the top cover 12 covers the frame and forms, together with the frame 12 and the thermal management component 13, the box 10 for accommodating the battery module.

The bottom protective plate 14 is fixed to the thermal management component 13 in a direction away from the battery module (that is, away from the internal space 100), and the bottom protective plate 14 is spaced from the thermal management component 13 to form a sealed space 140 therebetween. Specifically, in a vertical direction shown in FIG. 1, the bottom protective plate 14 of this embodiment is located below the thermal management component 13 and configured to protect the thermal management component 13 from impacts by external objects. The bottom protective plate 14 is also the outermost structural member of the battery.

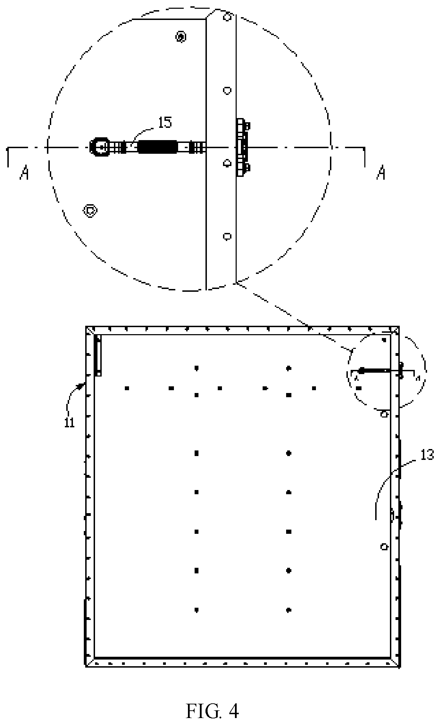

The airflow pipeline 15 is located inside the internal space 100 of the box 10. As shown in FIG. 4 and FIG. 5, the airflow pipeline 15 communicates with the sealed space 140 on one end and communicates with the outside of the box 10 on the other end, so as to circulate the inside and outside gases through the airflow pipeline 15 to make them balanced.

In a possible embodiment, refer to FIG. 4 and FIG. 5. The thermal management component 13 is provided with a connector 16, where the connector 16 runs through the thermal management component 13 and communicates with the sealed space 140, and the airflow pipeline 15 communicates with the sealed space 140 on one end via the connector 16.

The connector 16 is arranged inside the box 10, with one end communicating with the sealed space 140 and the other end used to connect the airflow pipeline 15. Thus, the connector 16 communicating with the sealed space 140 is used to implement communication between the airflow pipeline 15 and the sealed space 140. Parameters of the connector 16 such as shape, size, and/or specifications can be designed to facilitate standardized production and assembly of different products, thus reducing production costs and improving assembly efficiency. It can be understood that the connector 16 may be a male connector or a female connector (not shown in the figures) instead, which is not further described herein.

Furthermore, in some embodiments, the connector 16 is a male connector 16, where the male connector 16 includes a tubular portion 160 with one end running through the thermal management component 13 and communicating with the sealed space 140 and the other end embedded inside the airflow pipeline 15. In this way, the communication between the sealed space 140 and the airflow pipeline 15 can be achieved by using the tubular portion 160 having a simple structure.

As an alternative solution to or an additional solution based on "the male connector 16 includes a tubular portion 160 with one end running through the thermal management component 13 and communicating with the sealed space 140 and the other end embedded inside the airflow pipeline 15", the male connector 16 may further include a limiting flange 161 protruding from an outer wall of the tubular portion 16, where the limiting flange 161 abuts against and is fixed to a side surface of the thermal management component 13 facing away from the bottom protective plate 14 (in FIG. 5, it is the upper surface of the thermal management component 13).

The provision of the joining positions on the two ends of the male connector as protruding structures (here the limiting flange 161) facilitates the ease of one end of the male connector 16 running through the thermal management component 13 to allow communication with the sealed space 140 after the thermal management component 13 and the bottom protective plate 14 are fixed, and also facilitates the ease of the airflow pipeline 15 sleeving the other end of the male connector 16 to reduce assembly difficulty and guarantee the assembly yield.

In addition, with the limiting flange 161 protruding from the outer wall of the tubular portion 160 of the male connector 16, the position of the male connector 16 can be limited by the resistance of the limiting flange 161 and the thermal management component 13 against each other, thus guaranteeing that the male connector 16 extends into the sealed space 140 for a controllable depth after running through the thermal management component 13, and guaranteeing consistency of an assembled product. Meanwhile, the male connector 16 can be fixed via the resistance of the limiting flange 161 and the thermal management component 13 against each other, so as to guarantee reliability of the assembled product.

It can be seen that the above structure gives the specific solution details of the intercommunication of the airflow pipeline 15 and the sealed space 140, and the following will continue to describe the design details of the communication between the airflow pipeline 15 and the outside of the box 10.

Specifically, also referring to FIG. 5, the frame 11 is provided with a balancing valve assembly 17 allowing communication between the internal space 100 of the box 10 and the outside of the box 10, where the airflow pipeline 15 communicates with the outside of the box 10 on the other end via the balancing valve assembly 17.

The frame 11 can be a frame having a double-layer wall, where enough space is left between the double layers of the wall for accommodating a connection structure configured to fixedly connect the airflow pipeline 15 and the outer wall of the frame 11. In addition, more structural members can be provided in the space formed by the double-layer wall of the frame 11, without occupying any internal space of the box 10 and with the least possible protrusion from the outer wall of the frame 11 to impact energy density of the battery.

In a scenario where the battery box assembly 1 is applied to the bottom of a vehicle, the provision of the balancing valve assembly 17 for communicating with the outside on the frame 11 which serves as the side wall of the box 10 keeps the opening of the balancing valve assembly 17 away from the bottom protective plate 14 closer to the ground, thereby avoiding erosion and damage to the balancing valve assembly 17 caused by the mud and sand splashed from the ground during traveling of a vehicle.

The balancing valve assembly 17 includes a balancing valve body 171 and a connector portion 172 communicating with the balancing valve body 171, where the connector portion 172 is embedded in the frame 11, the balancing valve body 171 extends out of the box 10 (that is, to the outside of the frame 11), and the airflow pipeline 15 communicates with the balancing valve body 171 via the connector portion 172.

With the connector portion 172 which allows communication between the balancing valve body 171 and the airflow pipeline 15 embedded in the frame 11, a position where the balancing valve body 171 and airflow pipeline 15 communicate can be better fixed via the fixing effect of the frame 11, improving the reliability under a bumpy environment during the traveling of the vehicle.

In some specific embodiments, the connector portion 172 is a male connector, and an end of the airflow pipeline connected to the connector portion 172 is a female connector, where the female connector extends into the frame 11 and is in snap-fit with the inner side wall of the frame 11.

The connectors fixed to the frame 11 and the thermal management component 13 are both designed as male connectors and two ends of the airflow pipeline which are removable and movable are provided as female connectors, facilitating the flexible mounting and unmounting of movable components.

Referring to FIG. 6, the balancing valve body 171 includes a body portion 1711, a first sealing ring 1712, a waterproof breathable film 1713, a protective cover 1714, and an air vent 1715.

The body portion 1711 includes a bottom wall 1711a attached to the outer surface (that is, the side plate 111 located on the outer side) of the frame 11, an annular side wall 1711b bendingly extending from the bottom wall 1711a toward a direction leaving the frame 11 and enclosing a chamber 1710, a first opening 1711c made into the bottom wall 1711a and allowing the chamber 1710 to communicate with the connector portion 172, and a second opening 1711d enclosed by the annular side wall 1711b and opposite the first opening 1711c.

The bottom wall 1711a may be made of materials such as plastic or metal (for example, steel) and abuts against the outer surface (the right side surface of the right side plate 111 in FIG. 5, or the outer surface of the frame 11) of the side plate 111, so as to fix the position of the entire balancing valve body 171. Specifically, the side plate 111 of the frame 11 is provided with a through hole (not shown in the figure) for the connector portion 172 to run through. After the connector portion 172 passes into the through hole, the bottom wall 1711a abuts against the side plate 111 around the through hole, so that the entire balancing valve body 171 cannot move toward the inside (that is, the leftward direction in FIG. 5) of the frame 11, thus playing a role in fixing the position. In this embodiment, the bottom wall 1711a is annular, and the first opening 1711c is formed at the center of the bottom wall 1711a. More specifically, the bottom wall 1711a may be a circular ring, a square ring, or the like. No other examples will be given herein.

The annular side wall 1711b and the bottom wall 1711a may be made of the same or different materials. When made of the same material, the annular side wall 1711b and the bottom wall 1711a may be one integrally formed structure. When made of different materials, the annular side wall 1711b may be fixed to the outer edge of the bottom wall 1711a by welding, hot melting, or the like. In this embodiment, to better achieve the sealing effect, the annular side wall 1711b extends integrally out of the outer edge of the bottom wall 1711a, so as to enclose the chamber 1710 together with the bottom wall 1711a.

The first opening 1711c is used to allow communication between the connector 172 and the chamber 1710 and may be round, oval, square, or the like, and the connector portion 172 communicates with the chamber 1710 via the first opening 1711c to be connected to the external space via the balancing valve body 171.

The second opening 1711d is enclosed by an end edge of the annular side wall 1711b away from the bottom wall 1711a.

The first sealing ring 1712 is sandwiched between the outer surface of the frame 11 and the bottom wall 1711a.

The first sealing ring 1712 can prevent external moisture from entering the inside path of the frame 11 through a contact gap between the balancing valve body 171 and the frame 11, avoiding the moisture eroding the battery module inside the frame 11. It should be noted that in the actual production and assembly process, when the bottom wall 1711a abuts against the side plate 111 of the frame 11, because the flatness thereof cannot reach the perfect degree where no joint or gap exists after the bottom wall 1711a abuts against or is in contact with the side plate 111 of the frame 11, the first sealing ring 1712 sandwiched between the outer surface of the frame 11 and the bottom wall 1711a can further improve waterproofness of the product and reduce the risk of the moisture entering the inside of the frame 11 through the contact gap between the balancing valve body 171 and the frame 11 during use, guaranteeing the reliability of the product.

The waterproof breathable film 1713 is provided inside the chamber 1710 and separates the first opening 1711c and the second opening 1711d on two opposite sides.

The waterproof breathable film 1713 is used to allow gas to communicate and separate moisture, so as to prevent the external moisture from entering the path of the airflow pipeline 15 through the chamber 1710. The waterproof breathable film 1713 may be made of PU (Polyurethane, polyurethane) film, TPU (Thermoplastic Urethane, thermoplastic urethane) film, EPTFE (Polytetrafluoroethene, polytetrafluoroethene) film, or the like, which may be fixed in the chamber 1710 by gluing, or hot melting integral molding process.

The protective cover 1714 covers the second opening 1711d, and the air vent 1715 is made into the annular side wall 1711b, where the air vent 1715 and the second opening 1711d are located on the same side of the waterproof breathable film 1713. It should be noted that the bottom wall 1711a of the balancing valve body 171 abutting against the frame 11 and the first sealing ring 1712 being sandwiched between them can prevent external moisture from entering the airflow pipeline 15 through a joint thereof.

The protective cover 1714 may be made of metal or plastic and may be made of the same or different materials from the annular side wall 1711b. For example, when the protective cover 1714 and the annular side wall 1711b both are made of metal, the protective cover 1714 may be fixed to the annular side wall 1711b via a welding process (for example, laser welding); and when the protective cover 1714 and the annular sidewall 1711b both are made of plastic, the protective cover 1714 may be bonded to the annular side wall 1711b by using waterproof glue. It should be noted that the manner for fixing the protective cover 1714 and the annular side wall 1711b is not limited to welding and bonding. For example, in other embodiments, the protective cover 1714 made of plastic can also be fixed to the annular side wall 1711b made of metal or plastic by hot melting.

The protective cover 1714 covering the second opening 1711d can prevent external moisture and foreign matters from entering the airflow pipeline 15 through the second opening 1711d and the first opening 1711c. With the waterproof breathable film 1713 provided between the first opening 1711c and the second opening 1711d and the air vent 1715 and the second opening 1711d located on the same side of the waterproof breathable film 1713, external moisture can be prevented from entering the airflow pipeline 15 through the air vent 1715 and the first opening 1711c.

The provision of the air vent 1715 into the annular side wall 1711b in a direction different from an extension direction of an airflow passage between the first opening 1711c and the connector portion 172, twisting degree and length of a path for the external moisture or other foreign matters to reach the waterproof breathable film 1713 through the air vent 1715 can be increased, further improving the ability to separate moisture and foreign matters, prolonging service life of the waterproof breathable film 1713, improving the reliability of the product.

Furthermore, in some possible embodiments, the bottom wall 1711a is provided with a runway-shaped groove 1711e for accommodating the first sealing ring 1712, where the first sealing ring 1712 is runway-shaped. The first sealing ring 1712 being designed into a runway type prevents warping during assembly, allowing easy assembly and improving production efficiency.

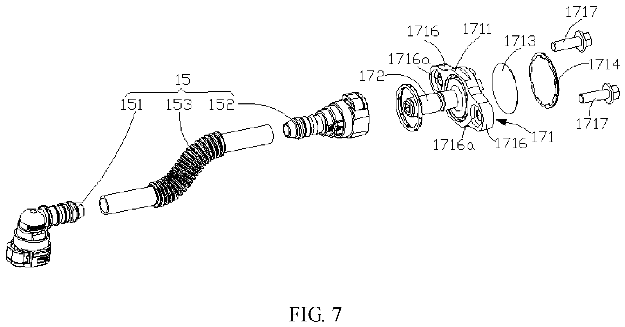

Furthermore, refer to FIG. 7. A fixing portion 1716 having a threaded hole 1716a protrudes from the body portion 1711, and the balancing valve assembly further includes a bolt 1717, where the fixing portion 1716 is fixed to the frame 11 via the threaded hole 1716a by the bolt 1717. It can be understood that the threaded hole 1716a can instead be a positioning through hole having a smooth inner wall, and with simply a corresponding threaded fixing hole provided in the frame 11, the entire balancing valve assembly 17 can be fixed to the frame 11 by cooperation between the bolt 1717 and the threaded fixing hole in the frame 11, making the balancing valve body 171 unable to move away from the frame 11 (that is, in the rightward direction in FIG. 5). The balancing valve assembly 17 being fixed to frame 11 via the protruding fixing portion 1716 and the bolt 1717 guarantees that the balancing valve assembly 17 is firmly fixed, improving reliability of the product.

In some possible embodiments, an air hole 1720 communicating with the airflow pipeline 15 and the chamber 1710 runs through the connector portion 172, and a snap-fit slot 1721 is provided on an outer surface of the connector portion 172, where the airflow pipeline 15 sleeves the periphery of the connector portion 172 and is snap fitted into the snap-fit slot 1721. The airflow pipeline 15 being snap fitted into the snap-fit slot 1721 guarantees that the airflow pipeline 15 and the connector portion 172 are firmly fixed, preventing detachment of the airflow pipeline 15, and thus improving the reliability of the product.

To guarantee sealing between the connector portion 172 and the airflow pipeline 15, moisture is prevented from entering the airflow pipeline 15 through the joint between the connector portion 172 and the airflow pipeline 15. In some possible embodiments, a second sealing ring 1722 is sandwiched between the connector portion 172 and the airflow pipeline 15 sleeving the periphery of the connector portion 172.

The second sealing ring 1722 can prevent the moisture in the air interlayer of the frame 11 from entering the path of the airflow pipeline 15 through the contact gap between the connector portion 172 and the airflow pipeline 15. It should be noted that in the actual production and assembly process, when the connector portion 172 is attached to the airflow pipeline 15, because the flatness thereof cannot reach the perfect degree where no joint or gap exists after the connector portion 172 abuts against or is in contact with the airflow pipeline 15, the second sealing ring 1722 being sandwiched between the connector portion 172 and the airflow pipeline 15 can further improve the waterproofness of the product and reduce the risk of the moisture in the air interlayer of the frame 11 entering the airflow pipeline 15 through the contact gap between the connector portion 172 and the airflow pipeline 15, guaranteeing the reliability of the product.

In this embodiment, the connector portion 172 is a male connector, and an end of the airflow pipeline connected to the connector portion 172 is a female connector 152, where the female connector 152 extends into the frame 11 and is in snap-fit with the inner side wall (the side plate 111 located on the inner side) of the frame 11.

It should be added that in some embodiments, the airflow pipeline 15 includes an elbow connector 151, a female connector 152, and a corrugated pipe 153, where the female connector 152 may be a straight connector, the corrugated pipe 153 is located between the elbow connector 151 and the female connector 152 (specifically a straight connector) and allows the elbow connector 151 to communicate with the female connector 152, where the elbow connector 151 communicates with the sealed space 140, and the female connector 152 communicates with the outside of the box 10. The provision of a connector at both ends of the corrugated pipe 153 enables the airflow pipeline 15 to achieve rigid connection with other components at two end positions of the airflow pipeline 15, avoiding the problem of detachment caused by flexible connection, and the use of the elbow connector 151 enables changing of the extension direction of the airflow pipeline 15 so as to adapt to the direction change of the airflow path inside the box 10 without impacting the proper arrangement of the battery module and other components inside the box 10.

As mentioned above, in the foregoing embodiment of this application, the balancing valve assembly 17 is provided on the frame 11 to allow communication between airflow pipeline 15 and the outside of the box 10. This is to keep the opening of the balancing valve assembly 17 away from the bottom protective plate 14 closer to the ground, thereby avoiding erosion and damage to the balancing valve assembly 17 caused by the mud and sand splashed from the ground during traveling of the vehicle. In addition, most of these components can be arranged inside the battery box 10 inside of the frame 11, facilitating full use of the internal redundant space of the battery and increasing the energy density of the battery. It can be understood that in other possible alternative implementations, the balancing valve assembly 17 can instead be provided on the top cover 12 farther away from the bottom protective plate 14. This can also keep the balancing valve assembly 17 away from the ground, thereby avoiding erosion and damage to the balancing valve assembly 17 caused by the mud and sand splashed from the ground during traveling of the vehicle.

A second embodiment of this application further provides adevice including the battery box assembly described in the foregoing embodiments and a battery arranged therein. Such device can be applied to electric devices having a traction battery such as cars, electric bicycles, ships, aircraft, or spacecraft, and can also be applied to electric devices that need heat dissipation for the battery such as cell phones, tablets, laptops, electric toys, and electric tools, for avoiding that the protective plate or similar elements deform due to temperature changes of the thermal management component and thus produce abnormal sound.

A third embodiment of this application further provides a manufacturing method of battery box assembly. The method includes: providing a thermal management component configured to regulate temperature of a battery module; providing a frame fixed to an edge region of the thermal management component; providing a top cover covering the frame and forming, together with the frame and the thermal management component, a box for accommodating a battery module; providing a bottom protective plate fixed to the thermal management component in a direction away from the battery module and spaced from the thermal management component to form a sealed space; and providing an airflow pipeline, where the airflow pipeline is arranged inside the box, and the airflow pipeline communicates with the sealed space on one end and communicates with the outside of the box on the other end. Furthermore, in some possible embodiments, the frame is provided with a balancing valve assembly communicating with the outside of the box, and the other end of the airflow pipeline is connected communicatively to the balancing valve assembly. In some other possible embodiments, the top cover is provided with a balancing valve assembly communicating with the inside of the box, and the other end of the airflow pipeline is connected communicatively to the balancing valve assembly. As can be understood, regardless of whether the balancing valve assembly is provided on the top cover or the frame, the airflow pipeline can be used to allow the sealed space between the bottom protective plate and the thermal management component to communicate with the outside of the box, eliminating pressure difference between air pressure in the sealed space and air pressure outside the box due to temperature changes of the thermal management component, thereby avoiding that the bottom protective plate deforms and thus produces abnormal sound.

## Claims

1. A battery box assembly (1), comprising:
a thermal management component (13) configured to regulate temperature of a battery module;
a frame (11) fixed to an edge region of the thermal management component (13);
a top cover (12) covering the frame (11) and forming, together with the frame (11) and the thermal management component (13), a box (10) for accommodating the battery module;
a bottom protective plate (14) fixed to the thermal management component (13) in a direction away from the battery module and spaced from the thermal management component (13) to form a sealed space (140); and
an airflow pipeline (15) arranged inside the box (10), wherein the airflow pipeline (15) communicates with the sealed space (140) on one end and communicates with the outside of the box (10) on the other end;
wherein the frame (11) is provided with a balancing valve assembly (17) allowing communication between the inside of the box (10) and the outside of the box (10), wherein the airflow pipeline (15) communicates with the outside of the box (10) on the other end via the balancing valve assembly (17); and
wherein the balancing valve assembly (17) comprises a balancing valve body (171) and a connector portion (172) communicating with the balancing valve body (171), wherein the connector portion (172) is embedded inside the frame (11), the balancing valve body (171) extends out of the box (10), and the airflow pipeline (15) communicates with the balancing valve body (171) via the connector portion (172);
**characterized in that**
the balancing valve body (171) comprises:
a body portion (1711), wherein the body portion (1711) comprises a bottom wall (1711a) attached to an outer surface of the frame (11), an annular side wall (1711b) bendingly extending from the bottom wall (1711a) toward a direction leaving the frame (11) and enclosing a chamber (1710), a first opening (1711c) made into the bottom wall (1711a) and allowing the chamber (1710) to communicate with the connector portion (172), and a second opening (1711d) enclosed by the annular side wall (1711b) and opposite the first opening (1711c);
a first sealing ring (1712) sandwiched between the outer surface of the frame (11) and the bottom wall (1711a);
a waterproof breathable film (1713) disposed inside the chamber (1710) and separating the first opening (1711c) and the second opening (1711d) on two opposite sides;
a protective cover (1714) covering the second opening (1711d); and
an air vent (1715) made into the annular side wall (1711b), wherein the air vent (1715) and the second opening (1711d) are located on the same side of the waterproof breathable film (1713).

2. The battery box assembly (1) according to claim 1, wherein the thermal management component (13) is provided with a connector (16) running through the thermal management component (13) and communicating with the sealed space (140), wherein the airflow pipeline (15) communicates with the sealed space (140) on one end via the connector (16).

3. The battery box assembly (1) according to claim 2, wherein the connector (16) is a male connector (16), wherein the male connector (16) comprises a tubular portion (160) with one end running through the thermal management component (13) and communicating with the sealed space (140) and the other end embedded inside the airflow pipeline (15), and/or the male connector (16) comprises a limiting flange (161) protruding from an outer wall of the tubular portion (160), wherein the limiting flange (161) abuts against and is fixed to a side surface of the thermal management component (13) facing away from the bottom protective plate (14).

4. The battery box assembly (1) according to any one of claims 1 to 3, wherein the connector portion (172) is a male connector, and an end of the airflow pipeline (15) connected to the connector portion (172) is a female connector (152), wherein the female connector extends into the frame (11) and is in snap-fit with an inner side wall of the frame (11).

5. The battery box assembly (1) according to any one of claims 1 to 4, wherein a fixing portion (1716) having a threaded hole (1716a) protrudes from the body portion (1711), and the balancing valve assembly (17) further comprises a bolt (1717), wherein the fixing portion (1716) is fixed to the frame (11) via the threaded hole (1716a) by the bolt (1717).

6. The battery box assembly (1) according to any one of claims 1 to 4, wherein an air hole (1720) communicating with the airflow pipeline (15) and the chamber (1710) runs through the connector portion (172), and a snap-fit slot (1721) is provided on an outer surface of the connector portion (172), wherein the airflow pipeline (15) sleeves the periphery of the connector portion (172) and is snap fitted into the snap-fit slot (1721).

7. The battery box assembly (1) according to claim 6, wherein a second sealing ring (1722) is sandwiched between the connector portion (172) and the airflow pipeline (15) sleeving the periphery of the connector portion (172).

8. The battery box assembly (1) according to any one of claims 1 to 4, wherein the bottom wall (1711a) is provided with a runway-shaped groove (1711e) for accommodating the first sealing ring (1712), wherein the first sealing ring (1712) is runway-shaped.

9. The battery box assembly (1) according to any one of claims 1 to 8, wherein the airflow pipeline (15) further comprises an elbow connector (151), a straight connector (152), and a corrugated pipe (153), wherein the corrugated pipe (153) is located between the elbow connector (151) and the straight connector (152) and allows the elbow connector (151) to communicate with the straight connector (152), wherein the elbow connector (151) communicates with the sealed space (140), and the straight connector (152) communicates with the outside of the box (10).

10. A device comprising the battery box assembly (1) according to any one of claims 1 to 9 and a battery arranged therein.

11. A method for manufacturing a battery box assembly according to any one of claism 1 to 9, the method comprising:
providing a thermal management component configured to regulate temperature of a battery module;
providing a frame fixed to an edge region of the thermal management component;
providing a top cover covering the frame and forming, together with the frame and the thermal management component, a box for accommodating the battery module;
providing a bottom protective plate fixed to the thermal management component in a direction away from the battery module and spaced from the thermal management component to form a sealed space; and
providing an airflow pipeline, wherein the airflow pipeline is arranged inside the box, and the airflow pipeline communicates with the sealed space on one end and communicates with the outside of the box on the other end.

12. The method according to claim 11, further comprising
providing, on the frame, a balancing valve assembly communicating with the outside of the box; and connecting the other end of the airflow pipeline communicatively to the balancing valve assembly.

## Patentansprüche

1. Batteriekastenanordnung (1), umfassend:
eine Wärmemanagementkomponente (13), die so konfiguriert ist, dass sie die Temperatur eines Batteriemoduls reguliert;
einen Rahmen (11), der an einem Randbereich der Wärmemanagementkomponente (13) fixiert ist;
eine obere Abdeckung (12), die den Rahmen (11) abdeckt und zusammen mit dem Rahmen (11) und der Wärmemanagementkomponente (13) einen Kasten (10) zum Aufnehmen des Batteriemoduls ausbildet;
eine untere Schutzplatte (14), die an der Wärmemanagementkomponente (13) in einer Richtung weg von dem Batteriemodul fixiert und von der Wärmemanagementkomponente (13) beabstandet ist, um einen abgedichteten Raum (140) auszubilden; und
eine Luftstromleitung (15), die im Inneren des Kastens (10) angeordnet ist, wobei die Luftstromleitung (15) an einem Ende mit dem abgedichteten Raum (140) in Verbindung steht und an dem anderen Ende mit dem Äußeren des Kastens (10) in Verbindung steht;
wobei der Rahmen (11) mit einer Ausgleichsventilanordnung (17) bereitgestellt ist, die eine Verbindung zwischen dem Inneren des Kastens (10) und dem Äußeren des Kastens (10) ermöglicht, wobei die Luftstromleitung (15) mit dem Äußeren des Kastens (10) an dem anderen Ende über die Ausgleichsventilanordnung (17) in Verbindung steht; und
wobei die Ausgleichsventilanordnung (17) einen Ausgleichsventilkörper (171) und einen Verbinderabschnitt (172) umfasst, der mit dem Ausgleichsventilkörper (171) in Verbindung steht, wobei der Verbinderabschnitt (172) im Inneren des Rahmens (11) eingebettet ist, der Ausgleichsventilkörper (171) aus dem Kasten (10) herausragt und die Luftstromleitung (15) über den Verbinderabschnitt (172) mit dem Ausgleichsventilkörper (171) in Verbindung steht;
**dadurch gekennzeichnet, dass**
der Ausgleichsventilkörper (171) Folgendes umfasst:
einen Körperabschnitt (1711), wobei der Körperabschnitt (1711) eine Bodenwand (1711a) umfasst, die an einer Außenfläche des Rahmens (11) angebracht ist, eine ringförmige Seitenwand (1711b) umfasst, die sich von der Bodenwand (1711a) biegend in eine Richtung erstreckt, die den Rahmen (11) verlässt, und eine Kammer (1710) eine erste Öffnung (1711c) einschließt, die in die Bodenwand (1711a) eingearbeitet ist und es der Kammer (1710) ermöglicht, mit dem Verbinderabschnitt (172) in Verbindung zu stehen, und eine zweite Öffnung (171 Id), die von der ringförmigen Seitenwand (1711b) eingeschlossen ist und der ersten Öffnung (1711c) gegenüberliegt;
einen ersten Dichtungsring (1712), der zwischen der Außenfläche des Rahmens (11) und der Bodenwand (1711a) sandwichartig angeordnet ist;
eine wasserdichte, atmungsaktive Folie (1713), die innerhalb der Kammer (1710) aufgebracht ist und die erste Öffnung (1711c) und die zweite Öffnung (1711d) an zwei gegenüberliegenden Seiten trennt;
eine Schutzabdeckung (1714), die die zweite Öffnung (1711d) abdeckt; und
eine Belüftungsöffnung (1715), die in die ringförmige Seitenwand (1711b) eingearbeitet ist, wobei sich die Belüftungsöffnung (1715) und die zweite Öffnung (1711d) auf derselben Seite der wasserdichten, atmungsaktiven Folie (1713) befinden.

2. Batteriekastenanordnung (1) nach Anspruch 1, wobei die Wärmemanagementkomponente (13) mit einem Verbinder (16) bereitgestellt ist, der durch die Wärmemanagementkomponente (13) verläuft und mit dem abgedichteten Raum (140) in Verbindung steht, wobei die Luftstromleitung (15) an einem Ende über den Verbinder (16) mit dem abgedichteten Raum (140) in Verbindung steht.

3. Batteriekastenanordnung (1) nach Anspruch 2, wobei der Verbinder (16) ein Steckverbinder (16) ist, wobei der Steckverbinder (16) einen rohrförmigen Abschnitt (160) umfasst, dessen eines Ende durch die Wärmemanagementkomponente (13) verläuft und mit dem abgedichteten Raum (140) in Verbindung steht und dessen anderes Ende in die Luftstromleitung (15) eingebettet ist, und/oder der Steckverbinder (16) einen Begrenzungsflansch (161) umfasst, der von einer Außenwand des rohrförmigen Abschnitts (160) vorsteht, wobei der Begrenzungsflansch (161) an einer Seitenfläche der Wärmemanagementkomponente (13), die von der unteren Schutzplatte (14) abgewandt ist, anliegt und daran fixiert ist.

4. Batteriekastenanordnung (1) nach einem der Ansprüche 1 bis 3, wobei der Verbinderabschnitt (172) ein Steckverbinder ist und ein Ende der Luftstromleitung (15), das mit dem Verbinderabschnitt (172) verbunden ist, eine Steckerbuchse (152) ist, wobei sich die Steckerbuchse in den Rahmen (11) erstreckt und in Schnappverbindung mit einer inneren Seitenwand des Rahmens (11) steht.

5. Batteriekastenanordnung (1) nach einem der Ansprüche 1 bis 4, wobei ein Fixierabschnitt (1716) mit einem Gewindeloch (1716a) aus dem Körperabschnitt (1711) hervorsteht und die Ausgleichsventilanordnung (17) ferner einen Bolzen (1717) umfasst, wobei der Fixierabschnitt (1716) über das Gewindeloch (1716a) durch den Bolzen (1717) an dem Rahmen (11) fixiert ist.

6. Batteriekastenanordnung (1) nach einem der Ansprüche 1 bis 4, wobei ein Luftloch (1720), das mit der Luftstromleitung (15) und der Kammer (1710) in Verbindung steht, durch den Verbinderabschnitt (172) verläuft, und ein Schnappverschluss (1721) an einer Außenfläche des Verbinderabschnitts (172) bereitgestellt ist, wobei die Luftstromleitung (15) den Umfang des Verbinderabschnitts (172) ummantelt und in den Schnappverschluss (1721) eingeschnappt ist.

7. Batteriekastenanordnung (1) nach Anspruch 6, wobei ein zweiter Dichtungsring (1722) zwischen dem Verbinderabschnitt (172) und der Luftstromleitung (15) sandwichartig angeordnet ist, der den Umfang des Verbinderabschnitts (172) ummantelt.

8. Batteriekastenanordnung (1) nach einem der Ansprüche 1 bis 4, wobei die Bodenwand (1711a) mit einer laufbahnförmigen Nut (1711e) zum Aufnehmen des ersten Dichtungsrings (1712) bereitgestellt ist, wobei der erste Dichtungsring (1712) laufbahnförmig ist.

9. Batteriekastenanordnung (1) nach einem der Ansprüche 1 bis 8, wobei die Luftstromleitung (15) ferner ein Winkelverbinder (151), ein gerader Verbinder (152) und ein gewelltes Rohr (153) umfasst, wobei das gewellte Rohr (153) zwischen dem Winkelverbinder (151) und dem geraden Verbinder (152) angeordnet ist und es dem Winkelverbinder (151) ermöglicht, mit dem geraden Verbinder (152) in Verbindung zu stehen, wobei der Winkelverbinder (151) mit dem abgedichteten Raum (140) in Verbindung steht und der gerade Verbinder (152) mit dem Äußeren des Kastens (10) in Verbindung steht.

10. Vorrichtung, umfassend die Batteriekastenanordnung (1) nach einem der Ansprüche 1 bis 9 und einer darin angeordneten Batterie.

11. Verfahren zum Herstellen einer Batteriekastenanordnung nach einem der Ansprüche 1 bis 9, wobei das Verfahren Folgendes umfasst:
Bereitstellen einer Wärmemanagementkomponente, die so konfiguriert ist, dass sie die Temperatur eines Batteriemoduls reguliert;
Bereitstellen eines Rahmens, der an einem Randbereich der Wärmemanagementkomponente fixiert ist;
Bereitstellen einer oberen Abdeckung, die den Rahmen abdeckt und zusammen mit dem Rahmen und der Wärmemanagementkomponente einen Kasten zum Aufnehmen des Batteriemoduls ausbildet;
Bereitstellen einer unteren Schutzplatte, die an der Wärmemanagementkomponente in einer Richtung weg von dem Batteriemodul fixiert ist und von der Wärmemanagementkomponente beabstandet ist, um einen abgedichteten Raum auszubilden; und
Bereitstellen einer Luftstromleitung, wobei die Luftstromleitung im Inneren des Kastens angeordnet ist und die Luftstromleitung an einem Ende mit dem abgedichteten Raum und an dem anderen Ende mit dem Äußeren des Kastens in Verbindung steht.

12. Verfahren nach Anspruch 11, ferner umfassend
Bereitstellen, auf dem Rahmen, einer Ausgleichsventilanordnung, die mit dem Äußeren des Kastens in Verbindung steht; und kommunikatives Verbinden des anderen Endes der Luftstromleitung mit der Ausgleichsventilanordnung.

## Revendications

1. Ensemble formant boîtier de batterie (1), comprenant :
un composant de gestion thermique (13) configuré pour réguler la température d'un module de batterie ;
un cadre (11) fixé à une région de bord du composant de gestion thermique (13) ;
un couvercle supérieur (12) recouvrant le cadre (11) et formant, conjointement avec le cadre (11) et le composant de gestion thermique (13), un boîtier (10) destiné à recevoir le module de batterie ;
une plaque de protection inférieure (14) fixée au composant de gestion thermique (13) dans une direction s'éloignant du module de batterie et espacée du composant de gestion thermique (13) pour former un espace étanche (140) ; et
une conduite d'écoulement d'air (15) disposée à l'intérieur du boîtier (10), dans lequel la conduite d'écoulement d'air (15) communique avec l'espace scellé (140) sur une extrémité et communique avec l'extérieur du boîtier (10) sur l'autre extrémité ;
dans lequel le cadre (11) est pourvu d'un ensemble formant soupape d'équilibrage (17) permettant la communication entre l'intérieur du boîtier (10) et l'extérieur du boîtier (10), dans lequel la conduite d'écoulement d'air (15) communique avec l'extérieur du boîtier (10) sur l'autre extrémité par l'intermédiaire de l'ensemble formant soupape d'équilibrage (17) ;
et
dans lequel l'ensemble formant soupape d'équilibrage (17) comprend un corps de soupape d'équilibrage (171) et une partie de raccordement (172) communiquant avec le corps de soupape d'équilibrage (171), dans lequel la partie de raccordement (172) est incorporée à l'intérieur du cadre (11), le corps de soupape d'équilibrage (171) s'étend hors du boîtier (10), et la conduite d'écoulement d'air (15) communique avec le corps de soupape d'équilibrage (171) par l'intermédiaire de la partie de raccordement (172) ;
**caractérisé en ce que**
le corps de soupape d'équilibrage (171) comprend :
une partie de corps (1711), dans lequel la partie de corps (1711) comprend une paroi inférieure (1711a) fixée à une surface extérieure du cadre (11), une paroi latérale annulaire (1711b) s'étendant de manière pliée depuis la paroi inférieure (1711a) vers une direction quittant le cadre (11) et enfermant une chambre (1710), une première ouverture (1711c) réalisée dans la paroi inférieure (1711a) et permettant à la chambre (1710) de communiquer avec la partie de raccordement (172), et une deuxième ouverture (1711d) enfermée par la paroi latérale annulaire (1711b) et opposée à la première ouverture (1711c) ;
une première bague d'étanchéité (1712) prise en sandwich entre la surface extérieure du cadre (11) et la paroi inférieure (1711a) ;
un film étanche respirant (1713) disposé à l'intérieur de la chambre (1710) et séparant la première ouverture (1711c) et la deuxième ouverture (1711d) sur deux côtés opposés ;
un couvercle de protection (1714) recouvrant la deuxième ouverture (1711d) ; et
un évent (1715) réalisé dans la paroi latérale annulaire (1711b), dans lequel l'évent (1715) et la deuxième ouverture (1711d) sont situés du même côté du film étanche respirable (1713).

2. Ensemble formant boîtier de batterie (1) selon la revendication 1, dans lequel le composant de gestion thermique (13) est pourvu d'un connecteur (16) s'étendant à travers le composant de gestion thermique (13) et communiquant avec l'espace scellé (140), dans lequel la conduite d'écoulement d'air (15) communique avec l'espace scellé (140) sur une extrémité par l'intermédiaire du connecteur (16).

3. Ensemble formant boîtier de batterie (1) selon la revendication 2, dans lequel le connecteur (16) est un connecteur mâle (16), dans lequel le connecteur mâle (16) comprend une partie tubulaire (160) avec une extrémité s'étendant à travers le composant de gestion thermique (13) et communiquant avec l'espace scellé (140) et l'autre extrémité intégrée à l'intérieur de la conduite d'écoulement d'air (15), et/ou le connecteur mâle (16) comprend une bride de limitation (161) faisant saillie depuis une paroi extérieure de la partie tubulaire (160), dans lequel la bride de limitation (161) vient en butée contre et est fixée à une surface latérale du composant de gestion thermique (13) tournée à l'opposé de la plaque de protection inférieure (14).

4. Ensemble formant boîtier de batterie (1) selon l'une quelconque des revendications 1 à 3, dans lequel la partie de raccordement (172) est un connecteur mâle, et une extrémité de la conduite d'écoulement d'air (15) raccordée à la partie de raccordement (172) est un connecteur femelle (152), dans lequel le connecteur femelle s'étend dans le cadre (11) et est en liaison par encliquetage avec une paroi latérale intérieure du cadre (11).

5. Ensemble formant boîtier de batterie (1) selon l'une quelconque des revendications 1 à 4, dans lequel une partie de fixation (1716) présentant un trou fileté (1716a) fait saillie depuis la partie de corps (1711), et l'ensemble formant soupape d'équilibrage (17) comprend en outre un boulon (1717), dans lequel la partie de fixation (1716) est fixée au cadre (11) par l'intermédiaire du trou fileté (1716a) par le boulon (1717).

6. Ensemble formant boîtier de batterie (1) selon l'une quelconque des revendications 1 à 4, dans lequel un évent (1720) communicant avec la conduite d'écoulement d'air (15) et la chambre (1710) s'étend à travers la partie de raccordement (172), et une fente de liaison par encliquetage (1721) est prévue sur une surface extérieure de la partie de raccordement (172), dans lequel la conduite d'écoulement d'air (15) s'emmanche dans la périphérie de la partie de raccordement (172) et est ajustée par encliquetage dans la fente d'ajustement par encliquetage (1721).

7. Ensemble formant boîtier de batterie (1) selon la revendication 6, dans lequel une deuxième bague d'étanchéité (1722) est prise en sandwich entre la partie de raccordement (172) et la conduite d'écoulement d'air (15) s'emmanchant dans la périphérie de la partie de raccordement (172).

8. Ensemble formant boîtier de batterie (1) selon l'une quelconque des revendications 1 à 4, dans lequel la paroi inférieure (1711a) est fournie avec une rainure en forme de piste (1711e) destinée à recevoir la première bague d'étanchéité (1712), dans lequel la première bague d'étanchéité (1712) est en forme de piste.

9. Ensemble formant boîtier de batterie (1) selon l'une quelconque des revendications 1 à 8, dans lequel la conduite d'écoulement d'air (15) comprend en outre un raccord coudé (151), un raccord droit (152) et un tuyau ondulé (153), dans laquelle le tuyau ondulé (153) est situé entre le raccord coudé (151) et le raccord droit (152) et permet au raccord coudé (151) de communiquer avec le raccord droit (152), dans lequel le raccord coudé (151) communique avec l'espace scellé (140) et le raccord droit (152) communique avec l'extérieur du boîtier (10).

10. Dispositif comprenant l'ensemble formant boîtier de batterie (1) selon l'une quelconque des revendications 1 à 9 et une batterie disposée dans celui-ci.

11. Procédé de fabrication d'un ensemble formant boîtier de batterie selon l'une quelconque des revendications 1 à 9, le procédé comprenant :
la fourniture d'un composant de gestion thermique configuré pour réguler la température d'un module de batterie ;
la fourniture d'un cadre fixé à une région de bord du composant de gestion thermique ;
la fourniture d'un couvercle supérieur recouvrant le cadre et la formation, conjointement avec le cadre et le composant de gestion thermique, d'un boîtier destiné à recevoir le module batterie ;
la fourniture d'une plaque de protection inférieure fixée au composant de gestion thermique dans une direction s'éloignant du module de batterie et espacée du composant de gestion thermique pour former un espace scellé ; et
la fourniture d'une conduite d'écoulement d'air, dans lequel la conduite d'écoulement d'air est disposée à l'intérieur du boîtier, et la conduite d'écoulement d'air communique avec l'espace scellé sur une extrémité et communique avec l'extérieur du boîtier sur l'autre extrémité.

12. Procédé selon la revendication 11, comprenant en outre
la fourniture, sur le cadre, d'un ensemble formant soupape d'équilibrage communiquant avec l'extérieur du boîtier ; et le raccordement de l'autre extrémité de la conduite d'écoulement d'air en communication avec l'ensemble formant soupape d'équilibrage.
